# FASCICULE DE BREVET EUROPEEN

(11) **EP 3 459 767 B1**
(45) Date de publication et mention de la délivrance du brevet: **09.12.2020**
(21) Numéro de dépôt: 18194814.2
(22) Date de dépôt: 17.09.2018
(51) Int. Cl.: B60D 1/48

(54) **AGENCEMENT DE MONTAGE D'UNE TRAVERSE D'ATTELAGE SUR UNE CAISSE DE VÉHICULE AUTOMOBILE**
ANORDNUNG ZUR MONTAGE EINES QUERTRÄGERS AN EINER KRAFTFAHRZEUGKAROSSERIE
ARRANGEMENT FOR ATTACHING A TRANSVERSAL BAR TO A MOTOR VEHICLE BODY

(43) Date de publication de la demande: 27.03.2019
(73) Titulaire: RENAULT s.a.s., 92100 Boulogne-Billancourt (FR)
(72) Inventeur: FRIJ, Bogdan, 700028 LASI (RO)

(56) Documents cités:
- EP-A1- 3 045 328
- WO-A1-2016/135405
- DE-A1-102013 021 380

## Description

La présente invention se rapporte à un agencement de montage d'une traverse d'attelage sur une caisse de véhicule automobile. Le document DE 10 2013 021380 A1 divulgue un agencement selon le préambule de la revendication 1.

Un dispositif d'attelage monté sur un véhicule automobile lui permet de tracter et de transporter des charges telles que des remorques par exemple. Ce dispositif d'attelage comporte classiquement une traverse d'attelage, rendue solidaire de la caisse du véhicule et qui offre un point d'accroche solide et facile d'accès. Généralement, le dispositif d'attelage est considéré comme un accessoire avec un montage sur le véhicule en après vente.

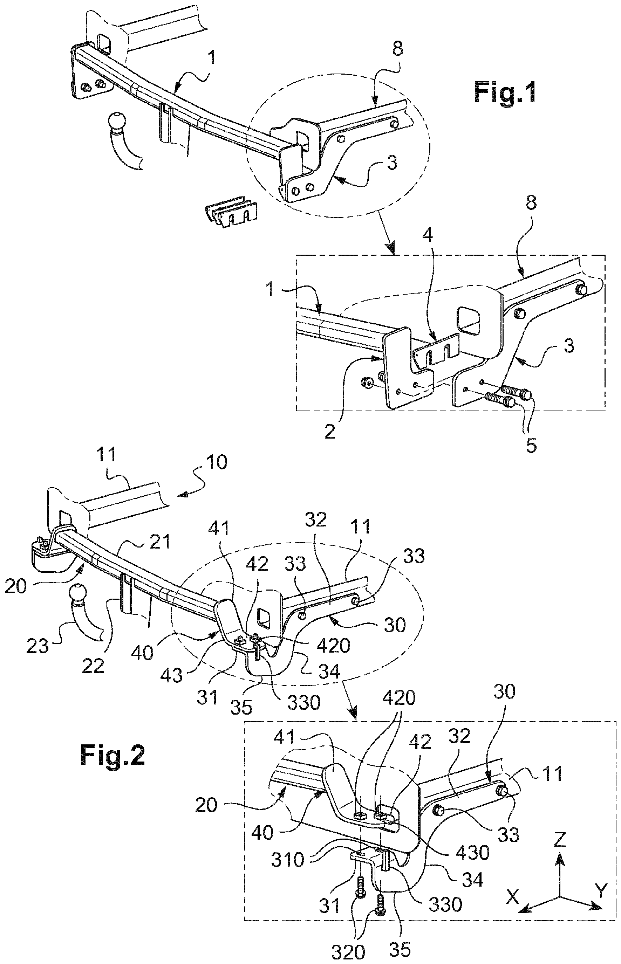

La figure 1 illustre une telle solution de montage en après vente dans laquelle la traverse d'attelage 1 présente à chacune de ses extrémités une platine de fixation 2 s'étendant dans un plan sensiblement normal à un axe longitudinal de la traverse d'attelage 1 pour la solidarisation de la traverse d'attelage 1 à la caisse 8 du véhicule automobile par l'intermédiaire d'un tirant 3, le tirant servant d'organe de liaison entre la traverse d'attelage et un longeron de la caisse du véhicule. Le tirant 3 est fixé à la platine de fixation 2 par l'intermédiaire d'une ou plusieurs vis de fixation 5 qui s'étendent sensiblement parallèlement à un axe transversal du véhicule. Des cales de réglage 4 sont disposées entre la platine de fixation 2 et le tirant de liaison correspondant 3 de façon à reprendre le jeu horizontal pouvant exister entre ces éléments.

Une tendance actuelle consiste à chercher à assembler le dispositif d'attelage en usine plutôt qu'en après vente. Or, la solution exposée ci-dessus de montage en après vente n'est pas adaptée aux contraintes de montage en usine, notamment car elle n'est ni ergonomique, ni rapide. En effet, après la fixation des tirants sur la caisse du véhicule, il est nécessaire que la traverse d'attelage soit pré-maintenue entre ces deux tirants par deux opérateurs.

Le document FR303912 fait connaître un système d'attelage comprenant des tirants de liaison chacun reliés à une première patte de fixation et à une deuxième patte de fixation de la traverse d'attelage, placées à ses extrémités, par l'intermédiaire de deux entretoises. Chaque patte de fixation comprend un retour transversal avec des perçages qui s'étendent sensiblement selon l'axe longitudinal du véhicule pour la fixation du retour transversal de la patte de fixation sur la partie arrière de caisse du véhicule, tandis que les deux tirants de liaison sont aptes à être fixés aux longerons de la caisse. Cette solution est toutefois relativement complexe en raison du nombre d'éléments de fixation requis. En outre, cette solution implique des modifications au niveau de la caisse du véhicule, en raison de la fixation sur la partie arrière de la caisse par l'intermédiaire des retours transversaux des pattes de fixation.

Le document EP2596966 décrit un système d'attelage dans lequel les moyens de fixation de la barre d'attelage comprennent deux ensembles de fixation comprenant chacun une joue de montage sensiblement perpendiculaire à la barre d'attelage, la joue de montage possédant à une de ses extrémités des moyens de montage à la caisse de véhicule automobile, et à son autre extrémité des moyens de serrage sur la barre d'attelage, comprenant une plaque d'appui sur la barre d'attelage coopérant avec une bride de serrage sur laquelle elle est boulonnée. Ce montage nécessite toutefois un pré-maintien en position de la barre d'attelage par des opérateurs, ce qui empêche un montage rapide.

On connaît encore du document EP2495115 un agencement de traverse d'attelage montée sur le châssis du véhicule par l'intermédiaire de deux équerres identiques qui servent en même temps au montage d'une barre anti-encastrement transversale sur le châssis et qui comportent chacune une partie principale plane comportant une zone de fixation de l'équerre sur le châssis et une zone de fixation de la traverse sur l'équerre, et deux ailes s'étendant transversalement par rapport à la partie principale, les deux ailes étant pliées dans des sens opposées pour la fixation de la traverse et de la barre anti-encastrement. L'assemblage de ce système d'attelage à un véhicule automobile prend également un temps trop important sur une chaine de montage.

Aussi, un problème qui se pose et que vise à résoudre la présente invention, est de proposer un dispositif de fixation d'une traverse d'attelage sur la caisse d'un véhicule automobile, permettant d'avoir un montage simple et ergonomique et de diminuer le temps de montage afin de permettre un assemblage adapté aux contraintes de montage en usine.

Dans le but de résoudre ce problème, la présente invention propose un agencement de montage d'une traverse d'attelage sur une caisse d'un véhicule automobile d'orientation principale longitudinale, comprenant deux tirants de liaison aptes à être fixés entre ladite traverse d'attelage et un longeron de la caisse du véhicule, ladite traverse comprenant à chacune de ses extrémités une platine de fixation comportant une aile intérieure solidaire de ladite traverse, caractérisé en ce que chaque tirant de liaison comporte une première partie de liaison, du côté opposé à une seconde partie de liaison dudit tirant de liaison apte à être fixée audit longeron, ladite première partie de liaison dudit tirant de liaison formant un premier plan d'appui parallèle au plan longitudinal transversal XY du véhicule et chaque platine de fixation comporte une aile extérieure s'étendant transversalement depuis ladite aile intérieure de manière à former un second plan d'appui parallèle au plan longitudinal transversal XY du véhicule, ledit second plan d'appui étant destiné à être rapporté contre ledit premier plan d'appui lors du montage de ladite traverse de façon à assurer un pré-maintien de ladite traverse d'attelage sur lesdits tirants de liaison.

Ainsi, après fixation des tirants de liaison sur la caisse du véhicule, la traverse d'attelage peut être mise en position aisément grâce à la coopération des deux plans d'appui horizontaux respectivement des platines de fixation agencées aux extrémités de la traverse et des premières parties de liaison des tirants de liaison, ce qui permet d'assurer le pré-maintien de la traverse sur les tirants pour sa fixation sans intervention extérieure.

Avantageusement, chaque platine de fixation est un élément d'une seule pièce obtenu par pliage d'une plaque, l'angle de pliage entre ladite aile intérieure et ladite aile extérieure étant compris entre 90° et 135° préférentiellement 120°.

De préférence, ladite première partie de liaison de chaque tirant de liaison formant ledit premier plan d'appui parallèle au plan longitudinal transversal XY du véhicule comprend au moins un trou oblong de fixation s'étendant longitudinalement suivant la direction transversale du véhicule, ledit au moins un trou oblong de fixation étant apte à être aligné avec un orifice de fixation formé dans ladite aile extérieure de ladite platine de fixation formant ledit second plan d'appui parallèle au plan longitudinal transversal XY du véhicule.

Avantageusement, un écrou de fixation est soudé sur ladite aile extérieure de ladite platine de fixation de manière coaxiale audit orifice de fixation.

De préférence, ledit au moins un trou oblong de fixation comprend deux trous oblongs de fixation décalés l'un par rapport à l'autre suivant la direction transversale du véhicule.

Avantageusement, des moyens de pré-positionnement de ladite traverse d'attelage sont prévus, comprenant un pilote d'indexage soudé sur ladite première partie de liaison de chaque tirant de liaison adapté pour s'engager dans un orifice d'indexage correspondant agencé sur ladite aile extérieure de ladite platine de fixation.

De préférence, lesdites premières parties de liaison respectives de chaque tirant de liaison s'étendent dans des directions transversales opposées l'une par rapport à l'autre.

L'invention concerne également un véhicule automobile caractérisé en ce qu'il comprend un agencement de montage d'une traverse d'attelage tel que décrit ci-dessus.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 présente une vue schématique en perspective et une vue de détail montrant un agencement de montage connu d'un système d'attelage sur la partie arrière d'une caisse d'un véhicule automobile et a déjà été décrite ;
- la Figure 2 présente une vue schématique en perspective et une vue de détail montrant un agencement de montage de la barre d'attelage sur la partie arrière de caisse du véhicule automobile conformément à un un mode de réalisation de l'invention ;

Pour les besoins de la description, on définit par rapport au véhicule, un repère orthogonal XYZ, dans lequel l'axe X définit une direction longitudinale, horizontale, orientée d'avant en arrière, l'axe Y définit une direction transversale, horizontale, orientée vers la droite, qui, avec l'axe X, définit un plan XY horizontal, et l'axe Z définit une direction verticale orientée vers le haut, perpendiculaire au plan XY.

Sur la figure 2, on a représenté l'arrière d'une caisse 10 de véhicule automobile munie de deux longerons 11 sur lesquels est destiné à être montée une traverse d'attelage 20. La traverse d'attelage 20 est constituée d'un élément tubulaire métallique creux 21 pourvue dans sa partie médiane d'une chape 22 apte à recevoir un élément d'accrochage 23, de type crochet d'attelage par exemple. Le montage de la traverse d'attelage 20 sur la caisse 10 du véhicule automobile est réalisé par l'intermédiaire de deux tirants de liaison 30 aptes à être fixés entre la traverse d'attelage 20 et un longeron respectif 11 de la caisse 10 du véhicule.

Plus précisément, les tirants de liaison 30 sont chacun reliés, par une première partie de liaison 31, à des extrémités respectives de la traverse d'attelage 20 par l'intermédiaire d'une platine de fixation 40 montée solidaire des extrémités respectives de la traverse 20 et, par une seconde partie de liaison 32, directement sur les longerons 11.

Les tirants de liaison 30 sont préférentiellement des éléments métalliques d'une seule pièce, obtenus par exemple par découpe d'une plaque et par pliage. La seconde partie de liaison 32 des tirants de liaison forme une partie plane qui s'étend dans un plan parallèle au plan longitudinal vertical XZ du véhicule et qui constitue une zone de fixation des tirants de liaison sur les longerons 11. Cette seconde partie de liaison 32 vient s'appliquer sur une paroi latérale extérieure des longerons 11. Des orifices de fixation, préférentiellement au nombre de deux, décalées selon la direction longitudinale, sont formées dans la seconde partie de liaison 32 de chaque tirant de liaison 30 pour la fixation du tirant de liaison 30 sur le longeron 11 par l'intermédiaire de vis de fixation 33.

La seconde partie de liaison 32 du tirant de fixation 30 est prolongée vers l'arrière par une partie 34 inclinée vers le bas, s'étendant toujours dans un plan parallèle au plan longitudinal vertical XZ du véhicule, terminée par un coude 35 assurant la liaison avec la première partie de liaison 31 du tirant de fixation 30. La première partie de liaison 31, disposée à l'opposé de la seconde partie de liaison 32, est préférentiellement issue de pliage et s'étend transversalement par rapport à la seconde partie de liaison 32 de manière à former un premier plan d'appui parallèle au plan longitudinal transversal XY du véhicule. Autrement dit, la première partie de liaison 31 des tirants de liaison 30, destinée à former une zone de fixation des platines de fixation 40 de la traverse d'attelage 20 sur le tirant de liaison 30, s'étend de façon à former une surface d'appui horizontale. Suivant l'exemple de la figure 2, la direction de pliage de la première partie de liaison 31 est telle que celle-ci s'étend en direction d'un axe longitudinal médian du véhicule.

Les deux tirants de liaison 30 peuvent être symétriques par rapport à un plan longitudinal vertical médian du véhicule, avec leur première partie de liaison 31 respective, formant une surface d'appui horizontale, dirigée vers l'axe longitudinal médian du véhicule.

Les platines de fixation 40 destinées à être montées aux extrémités respectives de la traverse d'attelage 20 sont préférentiellement des éléments métalliques d'une seule pièce, obtenus par exemple par découpe d'une plaque et par pliage de cette plaque. Chaque platine de fixation 40 présente une première aile 41, dite aile intérieure, fixée sensiblement obliquement au niveau d'une extrémité respective de la traverse d'attelage de façon à assurer la fermeture de cette extrémité creuse de la traverse. La fixation de l'aile intérieure 41 de la platine de fixation 40 sur l'extrémité de la traverse est par exemple réalisée par soudage. Chaque platine de fixation 40 comprend également une aile extérieure 42 reliée à l'aile intérieure 41 par l'intermédiaire d'une zone de pliage 43 et s'étendant transversalement depuis l'aile intérieure 41 soudée à l'extrémité de traverse de manière à former un second plan d'appui parallèle au plan longitudinal transversal XY du véhicule. Autrement dit, l'aile extérieure 42 de chaque platine de fixation 40 s'étend depuis l'aile intérieure 41 soudée à l'extrémité de la traverse d'attelage de façon à former une surface d'appui horizontale. L'angle de pliage entre ladite aile intérieure 41 et ladite aile extérieure 42 est avantageusement compris entre 90° et 135° préférentiellement 120°.

De la sorte, après fixation des tirants de liaison 30 sur les longerons 11 de la caisse 10 du véhicule, cette surface d'appui horizontale 42 des platines de fixation 40 de la traverse d'attelage 20 est rapportée sur la surface d'appui horizontale constituée par la première partie de liaison 31 des tirants de liaisons 30, ce qui permet d'assurer le pré-maintien de la traverse d'attelage sur les tirants de liaison 30.

La mise en position de la traverse d'attelage 20 sur les tirants de de fixation consiste donc à rapporter l'une sur l'autre les surfaces d'appui horizontales respectives 42, 31 des platines de fixation 40 de la traverse d'attelage 20 et des tirants de liaisons 30.

La fixation de la traverse d'attelage 20 sur les tirants de fixation 30 est réalisée par l'intermédiaire d'un système de vis de fixation et d'écrous soudés, agencé au niveau des surfaces d'appui horizontales respectives rapportées l'une sur l'autre.

Selon l'exemple de réalisation de la figure 2, la première partie de liaison 31 de chaque tirant de liaison 30, qui forme l'une de ces surfaces d'appui horizontales, comprend deux trous oblongs de fixation 310 s'étendant longitudinalement suivant la direction transversale Y du véhicule. Les deux trous oblongs de fixation 310 sont préférentiellement décalés l'un par rapport à l'autre suivant la direction transversale Y du véhicule. Chaque trou oblong de fixation 310 est apte à être aligné avec un orifice de fixation formé dans l'aile extérieure 42 de la platine de fixation 40 formant l'autre surface d'appui horizontale. Un écrou de fixation 420 est soudé sur l'aile extérieure de la platine de fixation 40 de manière coaxiale audit orifice de fixation, de façon à coopérer avec des vis de fixation 320 traversant verticalement de bas en haut les deux surfaces d'appui horizontales rapportées l'une contre l'autre. Les écrous soudés permettent avantageusement de réduire le temps de montage de la traverse d'attelage. La forme oblongue des trous oblongs de fixation permet un réglage aisé des dispersions selon la direction transversale du véhicule, en assurant un alignement en Y rapide et précis des trous oblongs de fixation et des orifices de fixation correspondant formés dans l'aile extérieure 42 de la platine de fixation 40. En variante, le système de vis de fixation et d'écrous soudés pour la fixation traverse d'attelage-tirant de liaison pourrait être réalisé de façon inversée à ce qui vient d'être décrit. Autrement dit, les trous oblongs de fixation peuvent être formés sur l'aile extérieure 42 des platines de fixation 40 et sont destinés à être alignés avec un orifice de fixation correspondant formé dans la première partie de liaison 31 de chaque tirant de liaison 30, tandis qu'un écrou de fixation est soudé sur cette première partie de liaison 31 de manière coaxiale audit orifice de fixation. Le vissage vertical s'effectue alors de haut en bas. L'une ou l'autre de ces variantes peut être préférée selon les contraintes d'architecture du véhicule.

Lors du montage de la traverse d'attelage 20 sur les tirants de liaison 30, des moyens de pré-positionnement de la traverse d'attelage 20 peuvent avantageusement être prévus, adaptés pour pré-positionner la traverse d'attelage 20 par rapport aux tirants de liaison 30 avant leur fixation via le système de vis de fixation et d'écrous soudés. Selon l'exemple de la figure 2, ces moyens comprennent un pilote d'indexage 330 soudé sur la première partie de liaison 31 de chaque tirant de liaison 30, adapté pour s'engager dans un orifice d'indexage 430 réalisé dans l'aile extérieure 42 de chaque platine de fixation 40. Ainsi, la mise en position de la traverse d'attelage 20 avant sa fixation peut être réalisée en engageant le pilote d'indexage 330 dans l'orifice d'indexage 43, ce qui permet de guider le positionnement de la traverse d'attelage 20 par rapport aux tirants de liaison 30.

## Revendications

1. Agencement de montage d'une traverse d'attelage (20) sur une caisse (10) d'un véhicule automobile d'orientation principale longitudinale, comprenant deux tirants de liaison (30) aptes à être fixés entre ladite traverse d'attelage (20) et un longeron (11) de la caisse du véhicule, ladite traverse comprenant à chacune de ses extrémités une platine de fixation (40) comportant une aile intérieure (41) solidaire de ladite traverse, chaque tirant de liaison (30) comportant une première partie de liaison (31), du côté opposé à une seconde partie de liaison (32) dudit tirant de liaison apte à être fixée audit longeron, ladite première partie de liaison (31) dudit tirant de liaison (30) formant un premier plan d'appui parallèle au plan longitudinal transversal XY du véhicule et chaque platine de fixation (40) comportant une aile extérieure (42) s'étendant transversalement depuis ladite aile intérieure (41) de manière à former un second plan d'appui parallèle au plan longitudinal transversal XY du véhicule, ledit second plan d'appui étant destiné à être rapporté contre ledit premier plan d'appui lors du montage de ladite traverse de façon à assurer un pré-maintien de ladite traverse d'attelage (20) sur lesdits tirants de liaison (30), **caractérisé en ce que** l'agencement comprend des moyens de pré-positionnement de ladite traverse d'attelage comprenant un pilote d'indexage (330) soudé sur ladite première partie de liaison de chaque tirant de liaison adapté pour s'engager dans un orifice d'indexage (430) correspondant agencé sur ladite aile extérieure (42) de ladite platine de fixation (40).

2. Agencement de montage selon la revendication 1, **caractérisé en ce que** chaque platine de fixation (40) est un élément d'une seule pièce obtenu par pliage d'une plaque, l'angle de pliage entre ladite aile intérieure (41) et ladite aile extérieure (42) étant compris entre 90° et 135°, préférentiellement 120°.

3. Agencement de montage selon la revendication 1 ou 2, **caractérisé en ce que** ladite première partie de liaison (31) de chaque tirant de liaison formant ledit premier plan d'appui parallèle au plan longitudinal transversal XY du véhicule comprend au moins un trou oblong de fixation (310) s'étendant longitudinalement suivant la direction transversale du véhicule, ledit au moins un trou oblong de fixation (310) étant apte à être aligné avec un orifice de fixation formé dans ladite aile extérieure (42) de ladite platine de fixation formant ledit second plan d'appui parallèle au plan longitudinal transversal XY du véhicule.

4. Agencement de montage selon la revendication 3, **caractérisé en ce qu'**un écrou de fixation (420) est soudé sur ladite aile extérieure (42) de ladite platine de fixation (40) de manière coaxiale audit orifice de fixation.

5. Agencement de montage selon la revendication 3 ou 4, **caractérisé en ce que** ledit au moins un trou oblong de fixation (310) comprend deux trous oblongs de fixation décalés l'un par rapport à l'autre suivant la direction transversale du véhicule.

6. Agencement selon l'une quelconque des revendications précédentes, **caractérisé en ce que** lesdites premières parties de liaison respectives (31) de chaque tirant de liaison (30) s'étendent dans des directions transversales opposées l'une par rapport à l'autre.

7. Véhicule automobile **caractérisé en ce qu'**il comprend un agencement de montage d'une traverse d'attelage (20) selon l'une quelconque des revendications précédentes.

## Patentansprüche

1. Anordnung zur Montage einer Anhängertraverse (20) an einer Karosserie (10) eines Kraftfahrzeugs mit längs verlaufender Hauptausrichtung, welche zwei Verbindungs-Zugelemente (30) umfasst, die zwischen der Anhängertraverse (20) und einem Längsträger (11) der Karosserie des Fahrzeugs befestigbar sind, wobei die Traverse an jedem ihrer Enden eine Befestigungsplatte (40) umfasst, die einen mit der Traverse fest verbundenen inneren Schenkel (41) aufweist, wobei jedes Verbindungs-Zugelement (30) einen ersten Verbindungsteil (31) auf der Seite aufweist, die einem zweiten Verbindungsteil (32) des Verbindungs-Zugelements gegenüberliegt, der an dem Längsträger befestigbar ist, wobei der erste Verbindungsteil (31) des Verbindungs-Zugelements (30) eine erste Stützebene bildet, die zur Querlängsebene XY des Fahrzeugs parallel ist, und wobei jede Befestigungsplatte (40) einen äußeren Schenkel (42) aufweist, der sich von dem inneren Schenkel (41) aus in Querrichtung erstreckt, um so eine zweite Stützebene zu bilden, die zur Querlängsebene XY des Fahrzeugs parallel ist, wobei die zweite Stützebene dazu bestimmt ist, bei der Montage der Traverse an der ersten Stützebene angebracht zu werden, um so ein provisorisches Halten der Anhängertraverse (20) an den Verbindungs-Zugelementen (30) sicherzustellen, **dadurch gekennzeichnet, dass** die Anordnung Mittel zur Vorpositionierung der Anhängertraverse umfasst, welche einen an den ersten Verbindungsteil jedes Verbindungs-Zugelements angeschweißten Indexierbolzen (330) umfassen, der dafür eingerichtet ist, in eine entsprechende Indexieröffnung (430) einzugreifen, die am äußeren Schenkel (42) der Befestigungsplatte (40) angeordnet ist.

2. Anordnung zur Montage nach Anspruch 1, **dadurch gekennzeichnet, dass** jede Befestigungsplatte (40) ein einstückiges Element ist, das durch Biegen einer Platte erhalten wird, wobei der Biegewinkel zwischen dem inneren Schenkel (41) und dem äußeren Schenkel (42) zwischen 90° und 135° liegt und vorzugsweise 120° beträgt.

3. Anordnung zur Montage nach Anspruch 1 oder 2, **dadurch gekennzeichnet, dass** der erste Verbindungsteil (31) jedes Verbindungs-Zugelements, der die zur Querlängsebene XY des Fahrzeugs parallele erste Stützebene bildet, wenigstens ein längliches Befestigungsloch (310) umfasst, das sich in der Querrichtung des Fahrzeugs längs erstreckt, wobei das wenigstens eine längliche Befestigungsloch (310) auf eine Befestigungsöffnung ausrichtbar ist, die in dem äußeren Schenkel (42) der Befestigungsplatte ausgebildet ist, der die zur Querlängsebene XY des Fahrzeugs parallele zweite Stützebene bildet.

4. Anordnung zur Montage nach Anspruch 3, **dadurch gekennzeichnet, dass** eine Befestigungsmutter (420) koaxial mit der Befestigungsöffnung auf den äußeren Schenkel (42) der Befestigungsplatte (40) geschweißt ist.

5. Anordnung zur Montage nach Anspruch 3 oder 4, **dadurch gekennzeichnet, dass** das wenigstens eine längliche Befestigungsloch (310) zwei längliche Befestigungslöcher umfasst, die in der Querrichtung des Fahrzeugs zueinander versetzt sind.

6. Anordnung nach einem der vorhergehenden Ansprüche, **dadurch gekennzeichnet, dass** sich die jeweiligen ersten Verbindungsteile (31) der Verbindungs-Zugelemente (30) in zueinander entgegengesetzten Querrichtungen erstrecken.

7. Kraftfahrzeug, **dadurch gekennzeichnet, dass** es eine Anordnung zur Montage einer Anhängertraverse (20) nach einem der vorhergehenden Ansprüche umfasst.

## Claims

1. Arrangement for mounting a tow hitch crossmember (20) to a body (10) of a motor vehicle having a longitudinal main orientation, comprising two connecting ties (30) that are able to be attached between said tow hitch crossmember (20) and a side member (11) of the body of the vehicle, said crossmember comprising at each of its ends an attachment plate (40) comprising an inner flange (41) which is secured to said crossmember, each connecting tie (30) comprising a first connecting part (31) on the side opposite a second connecting part (32) of said connecting tie that is able to be attached to said side member, said first connecting part (31) of said connecting tie (30) forming a first bearing plane parallel to the transverse longitudinal plane XY of the vehicle, and each attachment plate (40) comprising an outer flange (42) extending transversely from said inner flange (41) so as to form a second bearing plane parallel to the transverse longitudinal plane XY of the vehicle, said second bearing plane being intended to be brought against said first bearing plane during mounting of said crossmember so as to provide preliminary holding of said tow hitch crossmember (20) on said connecting ties (30), **characterized in that** the arrangement comprises means for pre-positioning said tow hitch crossmember, comprising an indexing pin (330) welded to said first connecting part of each connecting tie and designed to engage in a corresponding indexing orifice (430) arranged on said outer flange (42) of said attachment plate (40).

2. Mounting arrangement according to Claim 1, **characterized in that** each attachment plate (40) is an integral element obtained by bending a plate, the bending angle between said inner flange (41) and said outer flange (42) being between 90° and 135°, preferably 120°.

3. Mounting arrangement according to Claim 1 or 2, **characterized in that** said first connecting part (31) of each connecting tie forming said first bearing plane parallel to the transverse longitudinal plane XY of the vehicle comprises at least one oblong attachment hole (310) extending longitudinally along the transverse direction of the vehicle, said at least one oblong attachment hole (310) being able to be aligned with an attachment orifice formed in said outer flange (42) of said attachment plate forming said second bearing plane parallel to the transverse longitudinal plane XY of the vehicle.

4. Mounting arrangement according to Claim 3, **characterized in that** an attachment nut (420) is welded onto said outer flange (42) of said attachment plate (40) so as to be coaxial with said attachment orifice.

5. Mounting arrangement according to Claim 3 or 4, **characterized in that** said at least one oblong attachment hole (310) comprises two oblong attachment holes that are offset with respect to one another in the transverse direction of the vehicle.

6. Arrangement according to any one of the preceding claims, **characterized in that** said respective first connecting parts (31) of each connecting tie (30) extend in opposite transverse directions from one another.

7. Motor vehicle **characterized in that** it comprises an arrangement for mounting a tow hitch crossmember (20) according to any one of the preceding claims.
